(19) **Europäisches Patentamt**
**European Patent Office**
**Office européen des brevets**

(11) **EP 2 727 897 B1**

(12) **EUROPEAN PATENT SPECIFICATION**

(45) Date of publication and mention
of the grant of the patent:
**15.08.2018 Bulletin 2018/33**

(51) Int Cl.:
***C04B 35/83*** *(2006.01)*     ***C08J 5/04*** *(2006.01)*
***H01J 5/18*** *(2006.01)*

(21) Application number: **13187286.3**

(22) Date of filing: **03.10.2013**

(54) **X-RAY WINDOW FROM HIGH STRENGTH CARBON FIBER COMPOSITE WAFER**

RÖNTGENFENSTER AUS HOCHFESTEM KOHLENSTOFFFASERVERBUNDSTOFFWAFER

FENÊTRE À RAYONS X DE PLAQUETTE COMPOSITE DE FIBRES DE CARBONE À HAUTE RÉSISTANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2012 US 201213667273**

(43) Date of publication of application:
**07.05.2014 Bulletin 2014/19**

(73) Proprietors:
 • **Brigham Young University**
  **Provo, UT 84602 (US)**
 • **Moxtek, Inc.**
  **Orem, UT 84057 (US)**

(72) Inventors:
 • **Davis, Robert**
  **Provo, UT Utah 84604 (US)**
 • **Vanfleet, Richard**
  **Provo, UT Utah 84604 (US)**
 • **Zufeldt, Kyle**
  **Orem, TX Texas 84097 (US)**
 • **Davis, Andrew**
  **Provo, UT Utah 84604 (US)**
 • **Liddiard, Steven**
  **Springville, UT Utah 84663 (US)**

(74) Representative: **Walker, Ross Thomson**
 **Forresters IP LLP**
 **Skygarden**
 **Erika-Mann-Strasse 11**
 **80636 München (DE)**

(56) References cited:
 **US-A1- 2010 112 881**

 • **"Composites international news ED - Miracle & S L Donaldson D B", COMPOSITES, IPC BUSINESS PRESS LTD. HAYWARDS HEATH, GB, vol. 15, no. 3, 1 July 1984 (1984-07-01), pages 170-175, XP022771319, ISSN: 0010-4361, DOI: 10.1016/0010-4361(84)90271-4 [retrieved on 1984-07-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present application is related generally to high strength microstructures, such as for example x-ray window support structures.

BACKGROUND

Carbon fiber composite (CFC) wafers can be used in applications where high strength is desired. Barriers to the development of carbon fiber based structures, especially structures with micrometer-sized features, include difficulties in machining or patterning, and high surface roughness of cured composites. A root mean square surface roughness Rq of typical CFC wafers can be greater than 1 micrometer. Root mean square surface roughness Rq is defined by the following equation:

$$R_q = \sqrt{\frac{1}{n}\sum z_i^2}$$ . In this equation, z represents a height of the surface at different measured locations i. "Composites international news ED - Miracle & S L Donaldson D B", COMPOSITES, IPC BUSINESS PRESS LTD. HAYWARDS HEATH, GB, vol. 15, no. 3, 1 July 1984 (1984-07-01), pages 170-175, XP022771319, ISSN: 0010-4361, DOI: 10.1016/0010-4361(84)90271-4 [retrieved on 1984-07-01] discloses i.a. an article "Carbon fibre honeycomb for medical applications". US 2010/112881 A1 (BAHUKUDUMBI PRADIP [US]) 6 May 2010 (2010-05-06) discloses a composite material and method for manufacturing composite material.

SUMMARY

It has been recognized that it would be advantageous to have a carbon fiber composite wafer having high strength and low surface roughness. The present invention is directed to an x-ray window including a high strength support structure. The x-ray window comprises a support frame defining a perimeter and an aperture with a plurality of ribs extending across the aperture of the support frame and carried by the support frame. Openings exist between the plurality of ribs. The support frame and the plurality of ribs comprise a support structure. A film is disposed over, carried by, and spanning the plurality of ribs and is disposed over and spanning the openings. The film is configured to pass x-ray radiation therethrough. The support structure comprises a carbon fiber composite material (CFC), the CFC material comprising carbon fibers embedded in a matrix, and the support structure having a thickness of between 10-500 micrometers. A root mean square surface roughness Rq of the support structure on a side facing the film is less than 500 nm along a line of 2 millimeter length.

BRIEF DESCRIPTION OF THE DRAWINGS

FIG. 1 is a schematic top view of a carbon fiber composite wafer;
FIGs. 2-3 are schematic cross-sectional side views of a carbon fiber composite wafer;
FIG. 4 is a schematic cross-sectional side view of portion of a carbon fiber composite wafer, showing measurement of root mean square surface roughness Rq;
FIG. 5 is a side view of a carbon fiber;
FIG. 6 is a schematic cross-sectional side view of wafer including multiple carbon fiber composite sheets abutting a polyimide sheet;
FIG. 7 illustrates a first curing process for manufacture of a carbon fiber composite wafer;
FIG. 8 illustrates use of o-rings and a vacuum during the first curing process for manufacture of a carbon fiber composite wafer;
FIG. 9 illustrates a second curing process for manufacture of a carbon fiber composite wafer;
FIG. 10 is a schematic top view of an x-ray window support structure;
FIG. 11 is a schematic cross-sectional side view of an x-ray window, in accordance with an embodiment of the present invention; FIG. 12 is a schematic cross-sectional side view of an x-ray detector, including an x-ray window, in accordance with an embodiment of the present invention.

DEFINITIONS

• As used herein, the term "carbon fiber" or "carbon fibers" means solid, substantially cylindrically shaped structures having a mass fraction of at least 85% carbon, a length of at least 5 micrometers and a diameter of at least 1 micrometer.

• As used herein, the term "directionally aligned," in referring to alignment of carbon fibers with support structure members (such as ribs for example), means that the carbon fibers are substantially aligned with a longitudinal axis of the support structure members and does not require the carbon fibers to be exactly aligned with a longitudinal axis of the support structure members.

• As used herein, the term "porous" means readily permeable to gas.

DETAILED DESCRIPTION

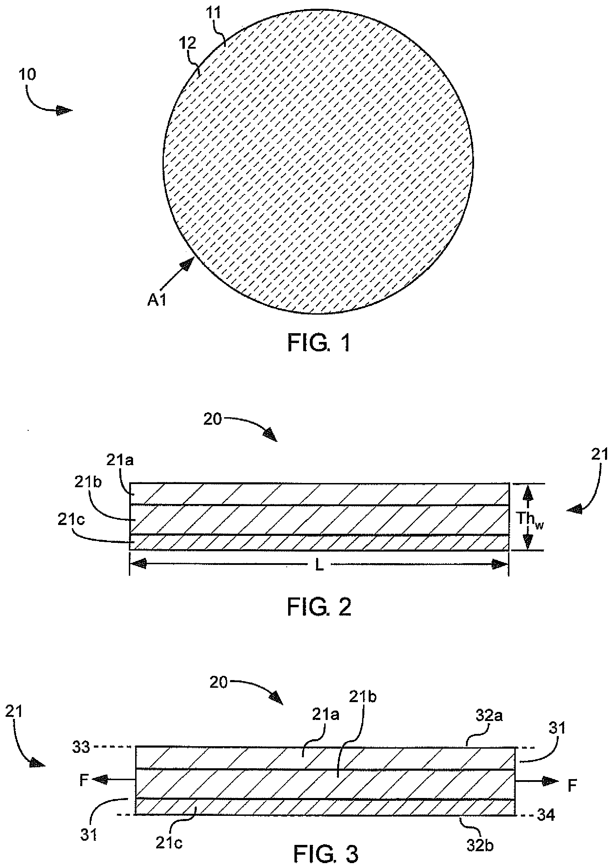

Illustrated in FIGs. 1-3 are carbon fiber composite (CFC) wafers 10 and 20 comprising at least one CFC sheet 21 including carbon fibers 12 embedded in a matrix 11. The matrix can comprise a material that provides sufficient strength and is compatible with the use of the wafer. For example, if the wafer will be used to fabricate an x-ray window support structure, considerations for matrix material may include a low atomic number elements and low outgassing. The matrix can comprise a material selected from the group consisting of polyimide, bismaleimide, epoxy, or combinations thereof. The matrix can comprise a material selected from the group consisting of amorphous carbon, hydrogenated amorphous carbon, nanocrystalline carbon, microcrystalline carbon, hydrogenated nanocrystalline carbon, hydrogenated microcrystalline carbon, or combinations thereof. The matrix can comprise a ceramic material selected from the group consisting of silicon nitride, boron nitride, boron carbide, aluminum nitride, or combinations thereof.

The carbon fibers 12 can be directionally aligned in a single direction A1, directionally aligned in multiple directions, or disposed in random directions in the matrix. Three CFC sheets 21a-c are shown in FIGs. 2-3. There may be more or less CFC sheets 21 than 3, depending on the desired application. The wafer 20 can have a thickness $Th_W$ of between 10-500 micrometers in one aspect, between 20 and 350 micrometers in another aspect, less than or equal to 20 micrometers in another aspect, or greater than or equal to 350 micrometers in another aspect.

CFC wafers can have high yield strength. A yield strength at fracture can be greater than 0.1 gigapascals (GPa) in one aspect, greater than 0.5 GPa in another aspect, greater than 2 GPa in another aspect, between 2 GPa and 3.6 GPa in another aspect, or between 0.5 GPa and 6 GPa in another aspect. Yield strength is defined as a force F in a direction parallel with a plane 33 or 34 of a side 32a or 32b of the wafer, per unit area, to cause the wafer to fracture. If fibers are directionally aligned, the force F can be aligned parallel with the fibers.

CFC wafers can have high strain. A strain at fracture can be greater than 0.01 in one aspect, greater than 0.03 in another aspect, greater than 0.05 in another aspect, or between 0.01 and 0.080 in another aspect. Strain is defined as the change in length L caused by a force F in a direction parallel with a plane 33 or 34 of the wafer divided by original length L. If fibers are directionally aligned, the force F can be aligned parallel with the fibers.

The wafer can have two faces or sides 32a-b and an edge 31. The sides 32a-b can have a substantially larger surface area than the edge 31. The sides 32a-b can be substantially parallel with each other. One side 32a can be disposed along, or parallel with, a single plane 33; and the other side 32b can be disposed along, or parallel with, a different single plane 34.

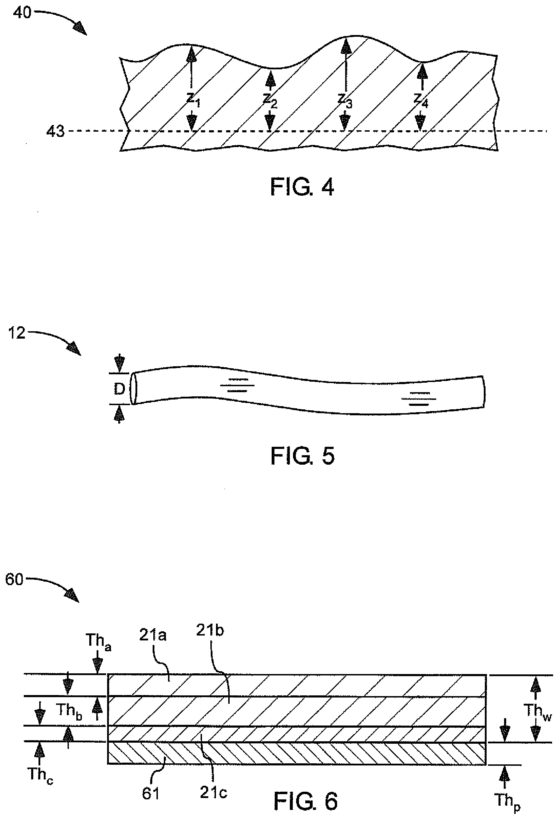

At least one side 32a and / or 32b of the wafer can be smooth, i.e. can have a low surface roughness. A low surface roughness can be beneficial for improving adhesion to other materials, such as to an x-ray window film for example. One measurement of surface roughness is root mean square surface roughness Rq calculated by the equation $R_q = \sqrt{\frac{1}{n}\sum z_i^2}$ . The measurement $z_i$ can be made along a surface of the wafer by an atomic force microscope. The measurement of $z_i$ on a portion of the wafer 40 is shown in FIG. 4. A distance from a plane 43, substantially parallel with the wafer, or substantially parallel with the sides 32a and 32b of the wafer, can differ by small amounts. A low Rq number indicates a low surface roughness. The root mean square surface roughness Rq of one or both sides of the wafers used for the present invention can be less than 300 nm in one aspect, or between 30 nm and 300 nm in another aspect, in an area of 100 micrometers by 100 micrometers. The root mean square surface roughness Rq of one or both sides of the wafers used for the present invention can be less than 500 nm in one aspect, or between 50 nm and 500 nm in another aspect, along a line of 2 millimeter length. The root mean square surface roughness Rq of one or both sides of the wafers used for the present invention can be less than 200 nanometers in one aspect, or between 20 nm and 200 nm in another aspect, in an area of 100 micrometers by 100 micrometers.

Shown in FIG. 5 is a side view of a carbon fiber 12. At least 50% of the carbon fibers 12 in a wafer can have a diameter D of between 2 and 10 micrometers in one aspect. At least 90% of the carbon fibers 12 in a wafer can have a diameter D of between 2 and 10 micrometers in another aspect. Substantially all of the carbon fibers 12 in a wafer can have a diameter D of between 2 and 10 micrometers in another aspect.

As shown on wafer 60 in FIG. 6, a polyimide sheet 61 can be cured together with and can abut the sheet(s) 21 of carbon fiber composite. The polyimide sheet can have a thickness $Th_p$, after curing, of between 0.1-100 micrometers.

Also shown on wafer 60 in FIG. 6 are carbon fiber composite sheet thicknesses $Th_{a-c}$. Each carbon fiber composite sheet 21a-c in the stack can have a thickness $Th_{a-c}$ of between 20 to 350 micrometers (20 $\mu$m < $Th_a$ < 350 $\mu$m, 20 $\mu$m < $Th_b$ < 350 $\mu$m, and 20 $\mu$m < $Th_c$ < 350 $\mu$m) in one aspect, less than or equal to 20 micrometers in another aspect, or greater than or equal to 350 micrometers in another aspect. There may be more or less than the three carbon fiber composite sheets 21a-c. These thicknesses are sheet 21 thicknesses after curing.

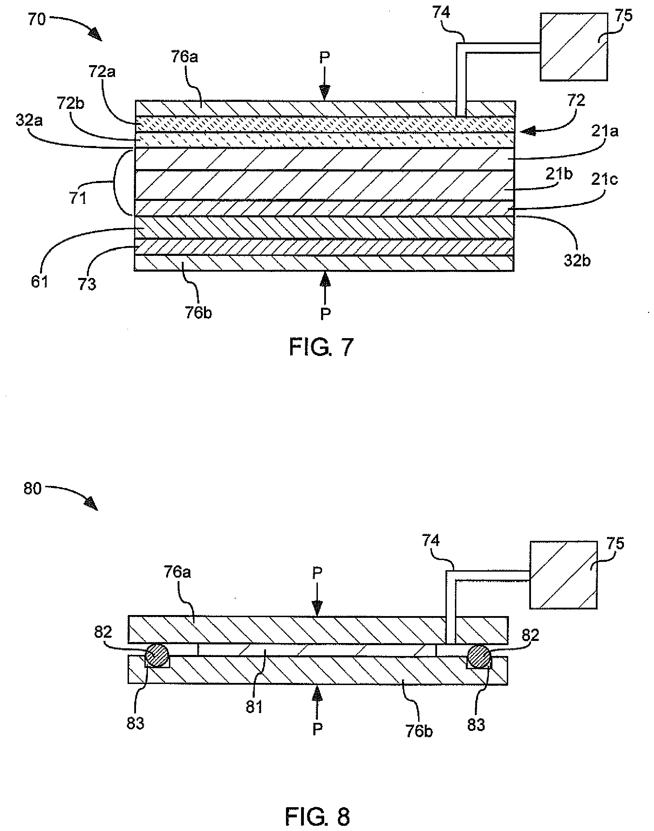

FIG. 7 illustrates a first curing process 70 for manufacture of a carbon fiber composite wafer. The method can comprise providing a stack 71 of at least one sheet of CFC 21a-c, the stack having a first surface 32a and a second surface 32b; pressing P the stack between a first pressure plate 76a and a second pressure plate 76b with a porous breather layer 72 disposed between the first surface 32a of the stack and the first pressure plate 76a; and curing by heating the stack 71 to a temperature of at least 50 °C (defining a first curing process). The amount of pressure to be used can depend on the matrix of the carbon composite. Pressure in the range of 50-200 psi has been successfully used. Pressure may be in the range of 25 - 500 psi.

A solid, polished layer 73 can be disposed between the second surface 32b of the stack 71 and the second pressure plate 76b during the first curing process. The polished layer 73 can help create a very smooth surface on the second surface 32b of the stack 71. The polished layer 73 can be a highly polished sheet of stainless steel, a silicon wafer, or a glass plate. A fluorine release layer can be used to avoid the stack sticking 71 to the polished layer 73. For example, a fluorinated alkane monolayer can be deposited on silicon wafers to facilitate release by placing in a vacuum desiccator overnight with 5 ml of Trichloro(1H,1H,2H,2H-perfluorooctyl)silane in a glass vial. The polished layer 73 can have a root mean square surface roughness Rq of less than 300 nm in an area of 100 micrometers by 100 micrometers, on a side facing the stack. Thus, it is not necessary for the polished layer 73 to have a polished surface on both sides.

A polyimide sheet 61 can be cured together with and can abut the CFC sheet(s) 21. The polyimide sheet 61 can be disposed between the second surface 32b of the stack 71 and the second pressure plate 76b. The polyimide sheet 61 can be disposed between the second surface 32b of the stack 71 and the polished layer 73 (if a polished layer is used). Alternatively, a polyimide sheet 61 can be disposed on both surfaces 32a and 32b of the stack 71. The polyimide sheet(s) 61 can be useful for improving the surface of the final wafer and / or for improving adhesion of the stack 71 to other materials.

The porous layer 72 can allow gas, emitted by the stack, to escape from the press. A multi-layer porous breather layer 72 can be used. For example, the porous breather layer 72 can comprise a porous polymer layer 72b facing the stack 71 and a nylon mesh 72a facing the first pressure plate 76a. A vacuum can aid in removal of the gas. A vacuum pump 75 can be attached by tubing 74 to the press and can draw a vacuum, such as less than 50 torr, between the pressure plates. The vacuum can be maintained through substantially all of the curing process, or through only part of the curing process, such as at least 50% of the curing process.

Shown in FIG. 8 are more details of the press and vacuum. The layers (stack of CFC, porous breather layer 72, optional polished layer 73, and optional polyimide layer 61) 81 can be in a central portion of the pressure plates 76a-b. An o-ring 82 can surround the layers 81. The o-ring 82 can be disposed at least partly in a channel 83 of at least one of the pressure plates, 76a and / or 76b. The vacuum tube 74 can extend into the central portion of the press, between the layers 81 and the o-ring 82.

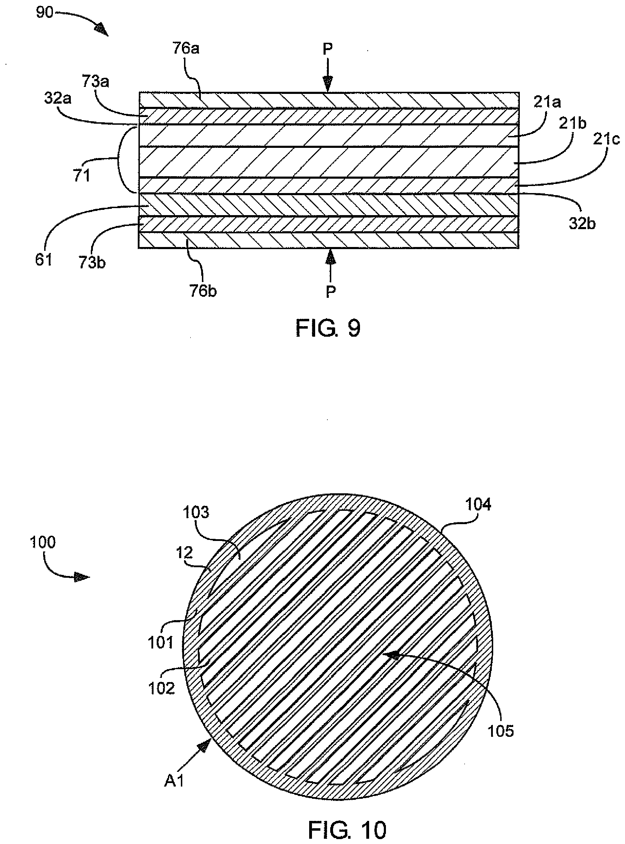

FIG. 9 illustrates a second curing process 90 for manufacture of a carbon fiber composite wafer. After completion of the first curing process 70, pressure P can be released from the stack and the porous layer 72 can be removed from the stack. A polished layer 73a and 73b can be disposed on each side of the stack. Note that if there was a polyimide sheet 61 in the first curing process, this polyimide sheet 61 can remain for the second curing process 90. The polished layers 73a and 73b can have a root mean square surface roughness Rq of less than 300 nm in an area of 100 micrometers by 100 micrometers, on a side facing the stack. The stack 71 (and optional polyimide sheet 61 if one is used) can be pressed between the polished layers by the first and second pressure plates 76a-b. The stack 71 (and optional polyimide layer 61) can be cured by heating the stack to a temperature of at least 50 °C.

A benefit of use of the second curing process 90 is that the gas can be removed during the first curing process 70, then polished layers 73a and 73b can be disposed on both sides 32a and 32b of the stack 71, with the result that both sides of the wafer can be highly polished. Thus, both sides of the wafer can have a root mean square surface roughness Rq as specified above.

Shown in FIG. 10 is a support structure 100 for an x-ray window according to the invention. The support structure 100 comprises a support frame 101 defining a perimeter 104 and an aperture 105. A plurality of ribs 102 extends across the aperture 105 of the support frame 101 and is carried by the support frame 101, with openings 103 between the ribs 102. The support frame 101 and the plurality of ribs 102 comprise a support structure 100. The support structure 100 comprises a carbon fiber composite (CFC) material. The CFC material comprises carbon fibers embedded in a matrix. Carbon fibers 12 in the composite can be substantially aligned with a direction A1 of the ribs, with at least one direction of the ribs if the ribs extend in multiple directions, or with all directions of all ribs if the ribs extend in multiple directions.

Carbon fibers in a carbon fiber composite can be graphitic, and thus can be highly resistant to chemical etching. Alternative methods have been found for etching or cutting micro-sized structures in CFC wafers for use in the present invention. The support structure 100 may be made by cutting a CFC wafer to form ribs 102 and openings 103. The CFC wafer may be cut by laser milling or laser ablation. A high power laser can use short pulses of laser to ablate the material to form the openings 103 by ultrafast laser ablation. A femtosecond laser may be used. A nanosecond pulsed YAG laser may be used. Ablating wafer material in short pulses of high power laser can be used in order to avoid overheating the CFC material. Alternatively, a non-pulsing laser can be used and the wafer can be cooled by other methods, such as conductive or convective heat removal. The wafer can be cooled by water flow or air across the wafer. The above mentioned cooling methods can also be used with laser pulses, such as a femtosecond laser, if additional cooling is needed.

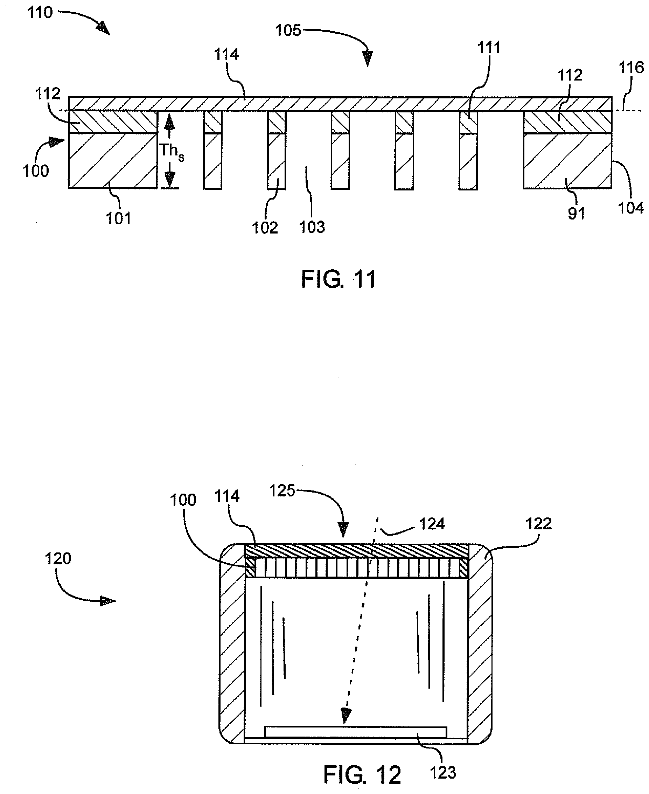

As shown in FIG. 11, the support structure 100 has a thickness $Th_s$ of between 10-500 micrometers. Tops of the ribs 102 and support frame 101 can terminate substantially in a single plane 116. A film 114 is disposed over, carried by, and spanning the plurality of ribs 102 and is disposed over and spanning the openings 103. The film 114 is configured to pass radiation therethrough, by being made of a material and thickness that will allow x-ray radiation to pass through with minimal attenuation of x-rays and / or minimal contamination of the x-ray signal.

As described above regarding FIGs. 6-9, a polyimide layer 61 can be cured abutting the CFC stack 71. The polyimide layer 61 can be cut into polyimide ribs 111 and a polyimide support frame 112, with openings 103 between the ribs 111, along with the CFC stack 71. The polyimide ribs 111 and the polyimide support frame 112 can be part of the support structure 100. The polyimide ribs 111 and the polyimide support frame 112 can be disposed between the CFC stack 71 and the film 114.

A surface of the support structure 100 facing the film has low surface roughness. This surface can be CFC 71 or can be polyimide 61. This surface can have a root mean square surface roughness Rq of less than 300 nm in one aspect, or between 30 nm and 300 nm in another aspect, in an area of 100 micrometers by 100 micrometers. This surface has a root mean square surface roughness Rq of less than 500 nm, in one aspect between 50 nm and 500 nm, along a line of 2 millimeter length. This surface can have a root mean square surface roughness Rq of less than 200 nanometers in one aspect, or between 20 nm and 200 nm in another aspect, in an area of 100 micrometers by 100 micrometers.

The ribs 102 can have a strain at fracture of greater than 0.01 in one aspect, greater than 0.03 in another aspect, greater than 0.05 in another aspect, or between 0.01 and 0.080 in another aspect. Strain is defined as a change in length caused by a force in a direction parallel with the ribs divided by original length. If fibers are directionally aligned, the force F can be aligned parallel with the fibers.

The wafers described herein can also be micropatterned by laser ablation and / or water jet to form other structures, such as a flexure mechanical mechanism, a mesoscale mechanical mechanism, a microscale mechanical mechanism, and / or elements in a microelectromechanical system (MEMS).

As shown in FIG. 12, an x-ray window 125, including a support structure 100 and a film 114, can be hermetically sealed to a housing 122. The housing can contain an x-ray detector 123. The x-ray detector can be configured to receive x-rays 124 transmitted through the window, and to output a signal based on x-ray energy.

**Claims**

1. An x-ray window (125) comprising:

   a. a support frame (101) defining a perimeter (104) and an aperture (105);
   b. a plurality of ribs (102) extending across the aperture (105) of the support frame (101) and carried by the support frame (101);
   c. openings (103) between the plurality of ribs (102);
   d. the support frame (101) and the plurality of ribs (102) comprising a support structure (100);
   e. the support structure (100) comprising a carbon fiber composite (CFC) material, the CFC material comprising carbon fibers embedded in a matrix;
   f. the support structure (100) having a thickness of between 10-500 micrometers;
   g. a film (114) disposed over, carried by, and spanning the plurality of ribs (102) and disposed over and spanning the openings (103), and configured to pass x-ray radiation therethrough; and
   h. a surface of the support structure (100) facing the film (114) having a root mean square surface roughness Rq of less than 500 nm along a line of 2 millimeter length.

2. The x-ray window (125) of claim 1, wherein the support structure (101) further comprises a polyimide layer (61):

   a. cured together with the CFC material;
   b. cut to form ribs (111), openings (103), and support frame (112) together with the CFC material; and
   c. disposed between the CFC material and the film (114).

3. The x-ray window (125) of claim 1, further comprising:

   a. a housing (122) to which the x-ray window (125) is hermetically sealed; and
   b. an x-ray detector (123), disposed within the housing (122), configured to receive x-rays (124) transmitted through the window, and to output a signal based on x-ray energy.

4. The x-ray window (125) of claim 1, wherein the surface of the support structure (100) facing the film (114) has a root mean square surface roughness Rq of less than 300 nm in an area of 100 micrometers by 100 micrometers.

5. The x-ray window (125) of claim 1, wherein:

   a. the support structure (100) has a yield strength at fracture of greater than 0.5 gigapascals (GPa); and
   b. yield strength is defined as a force, in a direction parallel with a plane (33 or 34) of a side (32a or 32b) of the wafer, per unit area, to cause the wafer to fracture

**6.** The x-ray window (125) of claim 1, wherein:

a. the support structure (100) has a strain at fracture of more than 0.01; and
b. strain is defined as the change in length caused by a force in a direction parallel with a plane (33 or 34) of the wafer divided by original length.

**7.** The x-ray window (125) of claim 1, wherein the plurality of ribs (102) and the openings (103) between the ribs were micropatterned by laser ablation, water jet, or combinations thereof.

**8.** The x-ray window (125) of claim 1, wherein the matrix comprises a material selected from the group consisting of polyimide, bismaleimide, epoxy, or combinations thereof.

**Patentansprüche**

**1.** Röntgenfenster (125), umfassend:

a. einen Stützrahmen (101), der einen Umfang (104) und eine Öffnung (105) definiert;
b. eine Vielzahl von Rippen (102), die sich über die Öffnung (105) des Stützrahmens (101) erstrecken und vom Stützrahmen (101) getragen werden;
c. Öffnungen (103) zwischen der Vielzahl von Rippen (102);
d. den Stützrahmen (101) und die Vielzahl von Rippen (102), die eine Stützstruktur (100) umfassen;
e. die Stützstruktur (100), die ein Kohlefaserverbundmaterial (CFC) umfasst, wobei das CFC-Material in eine Matrix eingebettete Kohlefasern umfasst;
f. die Stützstruktur (100), die eine Dicke zwischen 10-500 Mikrometer aufweist;
g. einen Film (114), der über der Vielzahl von Rippen (102) angeordnet ist, von diesen getragen wird und diese überspannt und über die Öffnungen (103) angeordnet ist und diese überspannt, und ausgelegt ist, Röntgenstrahlung dort hindurch zu leiten; und
h. eine Oberfläche der Stützstruktur (100), die dem Film (114) zugewandt ist, eine Quadratmittel-Oberflächenrauhheit Rq von weniger als 500 nm entlang einer Linie von 2 Millimeter Länge aufweist.

**2.** Röntgenfenster (125) nach Anspruch 1, wobei die Stützstruktur (101) ferner eine Polyimidschicht (61) umfasst:

a. zusammen mit dem CFC-Material gehärtet;

b. geschnitten, um Rippen (111), Öffnungen (103) und den Stützrahmen zusammen mit dem CFC-Material zu bilden; und
c. zwischen dem CFC-Material und dem Film (114) angeordnet.

**3.** Röntgenfenster (125) nach Anspruch 1, ferner umfassend:

a. ein Gehäuse (122) an welches das Röntgenfenster (125) hermetisch abgedichtet ist; und
b. einen Röntgendetektor (123), der innerhalb des Gehäuses (122) angeordnet ist,

ausgelegt Röntgenstrahlen (124) zu empfangen, die durch das Fenster gesendet wurden und ein Signal auf Basis von Röntgenenergie auszugeben.

**4.** Röntgenfenster (125) nach Anspruch 1, wobei die Oberfläche der Stützstruktur (100), die dem Film (114) zugewandt ist, eine Quadratmittel-Oberflächenrauhheit Rq von weniger als 300 nm in einer Fläche von 100 Mikrometer mal 100 Mikrometer aufweist.

**5.** Röntgenfenster (125) nach Anspruch 1, wobei:

a. die Stützstruktur (100) eine Streckgrenze bei Bruch größer als 0,5 Gigapascals (GPa) aufweist; und
b. Streckgrenze als eine Kraft, in einer Richtung parallel mit einer Ebene (33 oder 34) einer Seite (32a oder 32b) des Wafers, pro Flächeneinheit, definiert ist, um Bruch des Wafers zu bewirken.

**6.** Röntgenfenster (125) nach Anspruch 1, wobei:

a. die Stützstruktur (100) eine Bruchdehnung von mehr als 0,01 aufweist; und
b. Dehnung als die Änderung in Länge definiert ist, die durch eine Kraft in einer Richtung parallel mit einer Ebene (33 oder 34) des Wafers geteilt durch die ursprüngliche Länge bewirkt wird.

**7.** Röntgenfenster (125) nach Anspruch 1, wobei die Vielzahl von Rippen (102) und die Öffnungen (103) zwischen den Rippen durch Laserabtragung, Wasserstrahl oder Kombinationen davon mikrostrukturiert wurden.

**8.** Röntgenfenster (125) nach Anspruch 1, wobei die Matrix ein Material umfasst, das aus der Gruppe selektiert wurde, die aus Polyimid, Bismaleimid, Epoxid oder Kombinationen davon besteht.

**Revendications**

1. Fenêtre pour rayons X (125), comprenant :

 a. un cadre de support (101) définissant un périmètre (104) et une ouverture (105) ;
 b. une pluralité de nervures (102) s'étendant sur l'ouverture (105) du cadre de support (101) et supportées par le cadre de support (101) ;
 c. des orifices (103) entre la pluralité de nervures (102) ;
 d. le cadre de support (101) et la pluralité de nervures (102) comprenant une structure de support (100) ;
 e. la structure de support (100) comprenant un matériau composite de fibre de carbone (CFC), le matériau CFC comprenant des fibres de carbone intégrées dans une matrice ;
 f. la structure de support (100) ayant une épaisseur comprise entre 10 et 500 micromètres ;
 g. un film (114) disposé sur la pluralité de nervures (102), supporté par celles-ci et les recouvrant, et disposé sur les orifices (103) et les recouvrant, et conçu pour laisser passer à travers lui le rayonnement des rayons X ; et
 h. une surface de la structure de support (100) en regard du film (114) ayant une rugosité superficielle efficace Rq inférieure à 500 nm le long d'une ligne de 2 millimètres de long.

2. Fenêtre pour rayons X (125) selon la revendication 1, dans laquelle la structure de support (101) comprend en outre une couche de polyimide (61) :

 a. durcie avec le matériau CFC ;
 b. découpée pour former des nervures (111), des orifices (103) et un cadre de support (112) conjointement avec le matériau CFC ; et
 c. disposée entre le matériau CFC et le film (114).

3. Fenêtre pour rayons X (125) selon la revendication 1, comprenant en outre :

 a. un boîtier (122) avec lequel la fenêtre pour rayons X (125) est hermétiquement scellée ; et
 b. un détecteur de rayons X (123), disposé dans le boîtier (122), conçu pour recevoir des rayons X (124) transmis à travers la fenêtre, et pour émettre un signal sur la base d'une énergie de rayon X.

4. Fenêtre pour rayons X (125) selon la revendication 1, dans laquelle la surface de la structure de support (100) en regard du film (114) a une rugosité superficielle efficace Rq inférieure à 300 nm dans une aire de 100 micromètres par 100 micromètres.

5. Fenêtre pour rayons X (125) selon la revendication 1, dans laquelle :

 a. la structure de support (100) a une limite d'élasticité à la rupture supérieure à 0,5 gigapascals (GPa) ; et
 b. la limite d'élasticité est définie comme étant une force, dans une direction parallèle à un plan (33 ou 34) d'un côté (32a ou 32b) de la plaquette par unité de surface, qui amène la plaquette à rompre.

6. Fenêtre pour rayons X (125) selon la revendication 1, dans laquelle :

 a. la structure de support (100) a une déformation à la rupture supérieure à 0,01 ; et
 b. la déformation est définie comme étant la variation de longueur due à une force dans une direction parallèle à un plan (33 ou 34) de la plaquette, divisée par la longueur d'origine.

7. Fenêtre pour rayons X (125) selon la revendication 1, dans laquelle la pluralité de nervures (102) et les orifices (103) entre les nervures sont microstructurés par ablation par laser, par jet d'eau ou par des combinaisons correspondantes.

8. Fenêtre pour rayons X (125) selon la revendication 1, dans laquelle la matrice comprend un matériau choisi dans le groupe constitué de polyimide, de bismaléimide, d'époxy ou de combinaisons correspondantes.

FIG. 1

FIG. 2

FIG. 3

40

$z_1$ $z_2$ $z_3$ $z_4$

43

**FIG. 4**

12

D

**FIG. 5**

60

$Th_a$  21a  21b

$Th_b$

$Th_c$

$Th_w$

61  21c  **FIG. 6**  $Th_p$

**FIG. 7**

**FIG. 8**

FIG. 9

FIG. 10

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010112881 A1

**Non-patent literature cited in the description**

- Composites international news ED - Miracle & S L Donaldson D B. COMPOSITES, IPC BUSINESS PRESS LTD. HAYWARDS HEATH, 01 July 1984, vol. 15, 170-175